(19) Europäisches Patentamt
European Patent Office
Office européen des brevets

(11) **EP 2 068 415 A2**

(12) **EUROPEAN PATENT APPLICATION**

(43) Date of publication:
**10.06.2009 Bulletin 2009/24**

(51) Int Cl.:
***H02H 7/08*** *(2006.01)*

(21) Application number: **08170655.8**

(22) Date of filing: **04.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **07.12.2007 IT TO20070884**

(71) Applicant: **Indesit Company, S.p.A.**
**60044 Fabriano (AN) (IT)**

(72) Inventors:
• **Vinerba, Brunetta**
**60044, Fabriano (AN) (IT)**
• **Burzella, Luciano**
**60044, Fabriano (AN) (IT)**
• **Smargiassi, Enrico**
**60035, Jesi (AN) (IT)**

(74) Representative: **Dini, Roberto et al**
**Metroconsult S.r.l.**
**Via Sestriere 100**
**10060 None (TO) (IT)**

(54) **Method for monitoring the operation of a household appliance, and related household appliance**

(57)     The present invention relates to a method for monitoring a household appliance. The household appliance comprises at least one electric load (1) connected to an alternating power mains through a switch (4), and a control unit which opens or closes the switch so that, when the switch is closed, a supply current flows through both the load and the switch. The household appliance also comprises a feedback circuit that provides the control unit with a feedback signal correlated to the load supply current. The control unit (5) carries out a verification of the operation of the load and/or the switch, which verification comprises the steps of measuring the amplitude of the feedback signal and comparing the obtained reading with at least one reference value, so as to determine whether the load and/or the switch are operating correctly.

Fig.1

**Description**

The present invention relates to a method for monitoring the operation of a household appliance according to the preamble of claim 1, as well as to a related household appliance.

As known, household appliances include many components which are subject to wear and which may fail over time.

It is also known that household appliances are fitted with suitable safety systems which monitor the operating state of some components for preventive maintenance purposes and for stopping the household appliance in the event that a condition that might endanger the user is detected.

The monitored components, e.g. a motor that drives a washing machine's drum or a dishwasher's pump, are usually connected to the domestic electric network (typically a single-phase alternating power mains) by means of a triac driven by the control unit of the household appliance.

The triac is connected to the neutral of the power mains (which is kept at a constant direct voltage value) through the terminal MT1, while the triac terminal MT2 is connected to the monitored component, so that the latter can be either supplied with power or not.

The solutions known in the art for monitoring the components of a household appliance utilize a feedback circuit that sends a signal which is proportional to the voltage being present at the triac terminal MT2 to a microprocessor (usually the same one that drives the triac).

The feedback signal sent to the microprocessor is read by an interrupt input which thus detects the presence of an alternating or direct voltage signal at the triac terminal MT2.

By comparing the interrupt input reading with a supply voltage zero crossing signal, the same microprocessor then measures the phase displacement of the load.

Depending on the existing situation (triac open or closed), the feedback signal is interpreted by the microprocessor in order to check if the load is disconnected or malfunctioning, or to detect any triac malfunction.

The main drawback of these solutions is a high standby consumption (in the range of a few hundredths of mW) because, due to the feedback branch, there is always some current flowing through the load, even when the triac is open.

Moreover, these solutions do not allow to verify the diode-mode operation of the triac for both half-waves and, with low-absorption loads such as, for example, refrigerator fans, they do not allow to detect a blocked load condition, since in the presence of low-absorption loads, a blocked load will not cause a perceptible phase displacement variation, so that this type of solution cannot distinguish a properly operating load from a blocked one.

The main object of the present invention is to overcome the above-described drawbacks of the prior art.

In particular, the main object of the present invention is to allow, through a single feedback, to effectively check the operation of the load and/or of the load control switch.

It is a further object of the present invention to reduce standby consumptions due to the load monitoring circuit.

This object is achieved through a method and a household appliance incorporating the features set out in the appended claims, which are intended as an integral part of the present description.

The present invention is based on the general idea of measuring the current absorbed from the power mains by a household appliance's load through the triac (or any switch possibly used in its place) that connects it to the mains. More in general, said measurement may be replaced by a measurement of a feedback signal correlated to the load supply current, e.g. a voltage signal dropping across a shunt resistor run through by the same load supply current.

The feedback signal reading is then compared with at least one reference value in order to determine if the load and/or the switch are operating correctly.

By using a feedback signal correlated to the load supply current, which flows through the switch as well, it is possible to monitor both the load (e.g. the motor of the washing machine) and the load control switch by means of a single feedback branch.

This solution turns out to be particularly advantageous when the switch is a triac; this type of device may in fact fail over time and then begin to operate in diode mode, which mode may cause serious damage to the load or even bring about a dangerous situation for the user (fire risk).

Furthermore, by measuring the current absorbed by the load at the triac terminal MT1, or more in general on the branch from the mains to the switch that connects the load to the mains, standby consumptions caused by the load monitoring function are reduced because no current flows through the load when the switch is open.

Advantageously, the current absorbed by the load can be measured through a shunt resistor connected between the switch and the mains.

Further objects and advantages of the present invention will become apparent from the following description and from the annexed drawings, wherein:

- Fig. 1 shows a load control circuit of a household appliance according to an embodiment of the present invention;
- Fig. 2 is a flow chart of the method according to the invention.

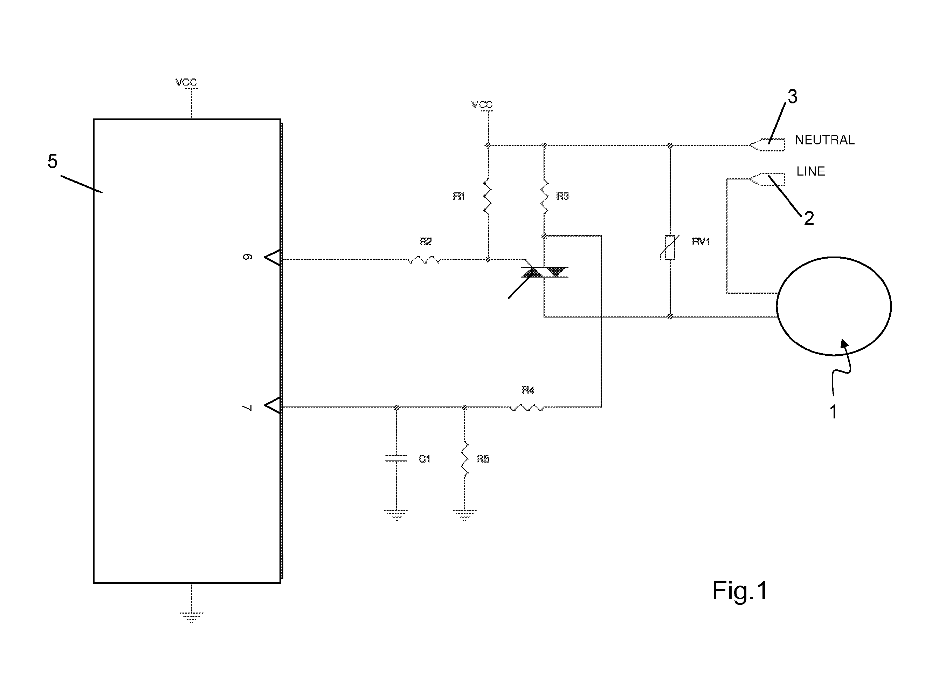

Referring now to the preferred embodiment example shown in Fig. 1, reference numeral 1 designates a load to be driven, e.g. the air recirculation fan of a refrigerator.

In this case, the load is an inductive one and is supplied with an alternating voltage being present across terminals 2 and 3, which respectively receive the phase and neutral wires of a single-phase electric network that supplies an alternating voltage to the household appliance.

In the preferred embodiment example, the electric network is the domestic power mains, which in Europe supplies a voltage having an rms value of 230V and a frequency of 50Hz; the invention is not however limited to the power voltage amplitude or frequency available from this domestic mains; for instance, in the USA a 110Vrms, 60Hz power voltage is used.

Load 1 is connected to phase 2 on one end and to terminal MT2 of triac 4 on the other end.

Triac 4, whose terminal MT1 is connected to neutral 3 of the power mains through a 50Ω shunt resistor R3, is controlled through control signals applied to the respective gate.

The control signals are generated by a control unit of the household appliance, which in the example shown in Fig. 1 comprises microcontroller 5 (e.g. microcontroller R8C15 manufactured by Renesas Technology) that drives triac 4 through output 6. The commands generated by microcontroller 5 are sent to the gate of triac 4 through the 470Ω resistor R2.

The gate of triac 4 is connected to the direct voltage Vcc (imposed on neutral 3 of the alternating power mains) through a 2.7kΩ polarization resistance R1.

Thus the microcontroller controls the triac in such a manner as to either connect or not load 1 to the power mains in order to draw the supply current required by load 1.

When triac 4 is not triggered, no current flows through load 1; when triac 4 is triggered, a supply current flows through load 1 which causes a voltage drop at shunt resistor R3 arranged in series with triac 4.

The voltage across shunt resistor R3 is read by means of a feedback branch consisting of divider R4-R5 (where R4 and R5 are 10 kΩ each) and the 1nF capacitor C1, the latter being essentially used for filtering any noise inputted to port 7 of microcontroller 5.

Port 7 is an input of the A/D converter of microcontroller 5, through which the amplitude of the feedback signal is measured; in particular, this measurement reads the peak-to-peak voltage value across R5.

The circuit shown in Fig. 1 therefore allows to detect the supply current of load 1 that flows through shunt resistor R3; however, since the exact current reading is not per se interesting, it is preferable to measure a feedback signal correlated (i.e. biunivocally bound) to the state of the load supply current, so that it can be compared with an expected state of the supply current and of the feedback signal.

The voltage measured across R5 is in fact proportional to the load supply current, and therefore measuring this voltage is equivalent to measuring the supply current; what changes is the reference value with which the reading is to be compared in order to verify the operation of load 1 and/or triac 4.

Secondary effects have been disregarded in the above description of Fig. 1, such as the currents flowing through thermistor Rv1 employed for safety reasons between neutral 3 and load 1.

The sizing of the components of the circuit shown in Fig. 1, as well as the typology of the microcontroller used therein, depend strictly on the nature of load 1, the type of supply (mains frequency and amplitude), and the A/D conversion characteristics of the microcontroller: it follows that all the aforementioned values must be considered to be specific of a predetermined circuit embodiment example, and have therefore been provided herein only by way of explanatory but non-limiting example.

According to the invention, microcontroller 5 implements a method for checking the operation of load 1 and triac 4.

This method may be implemented periodically by microcontroller 5 upon request from a higher-level routine dedicated to controlling and handling the activation of the loads of the household appliance; such a request may derive from a particular event or, more simply, be sent on expiry of a timer that sets the interval at which said monitoring method must be carried out.

It should be stated beforehand that when a load is powered, its normal operating behaviour is different from its behaviour immediately after start-up. For this reason, the method according to the invention makes a distinction among different phases characterized by a different behaviour of load 1:

- "start-up transient", immediately following the activation of load 1 and characterized by an especially high absorption peak;
- "pick-up", subsequent to the start-up transient and characterized, in normal operating conditions, by a progressive reduction of the energy required by load 1;
- "normal on state", subsequent to the pick-up phase and characterized, in normal operating conditions, by a rather constant energy absorption by load 1 (of course, on condition that load 1 does not require variable power values);
- "normal off state", characterized by a null energy absorption by load 1, since triac 4 that drives load 1 is not triggered.

According to the type of load 1, the start-up transient and pick-up phases may have different durations, which may nevertheless be set during the production stage as a function of the type of load 1 to be monitored.

The normal state phases have a duration that may vary depending on the household appliance's operating mode (e.g. testing mode or operating mode) and operating conditions (especially the environmental ones). Let us for example consider the air recirculation fan of a refrigerating apparatus like a refrigerator: this fan is turned on and off as a function of the humidity and/or temperature within the cell. It is therefore apparent that the higher the temperature and humidity of the air in the household appliance's operating environment, the higher the number and/or the longer the duration of the various fan activation phases ("normal on state"). Likewise, the number and/or duration of the various fan activation phases will increase with the number of times that the user opens the refrigerator door.

For this type of apparatuses and loads, therefore, the normal on/off state phases do not have a predetermined length.

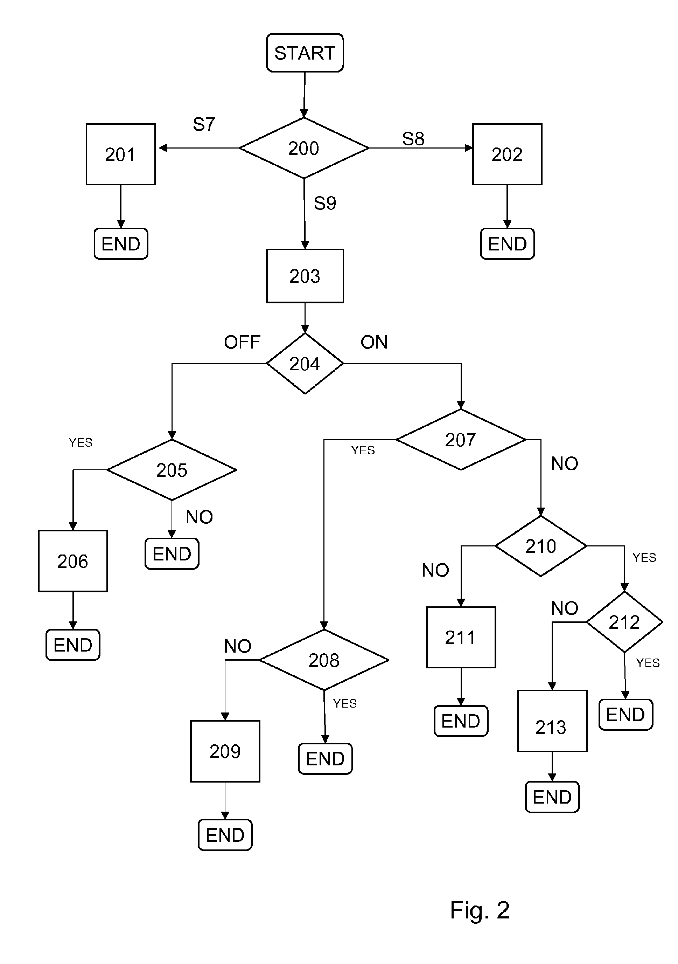

Referring back to Fig. 2, the method comprises a first step (step 200) of detecting the operating condition of load 1.

The operating condition of load 1 may be determined, for example, by detecting the transition from a load off state to a load on state (which means that the start-up transient phase is being carried out) or by detecting that X seconds have elapsed since the load has been started (which means that the pick-up phase is being carried out) or that Y seconds (where Y>X) have elapsed from start-up, which means that the "normal on state" phase is being carried out (X and Y being a few tens of ms, e.g. X may be 80 ms while Y may be 300 ms).

Whenever a start-up transient condition S7 of load 1 (step 201) is detected, the value of a reference parameter "meas_fb_rif" is reset and a time counter is initialized for determining the interval at which the verification of the household appliance's operating state must be repeated in the next normal on/off state phases.

This counter is set to a value (e.g. N seconds, N being typically between 2 and 10 seconds when load 1 is a refrigerator fan) that depends on the type of load 1 and on the household appliance's operating mode: for example, during the testing phase the verification of the operation of load 1 must be carried out at shorter intervals than after the household appliance has been installed and is operating at the user's home, so that N will advantageously be a lower value for the testing phase.

If a pick-up condition S8 of load 1 is detected, the method switches to step 202, where every P periods of the mains voltage, P being a predetermined integer (e.g. P may have a value of 2):

- a peak-to-peak measurement of the feedback voltage inputted to microcontroller 5 is carried out in order to update a parameter "meas_fb", and
- the parameter meas_fb_rif is set to the higher value between the value meas_fb and the value meas_fb_rif stored in memory:

$$meas\_fb\_rif= MAX(meas\_fb\_rif, meas\_fb)$$

If a normal operating condition S9 ("normal on state" or "normal off state") of load 1 is detected, the operating state of load 1 or triac 4 is verified every N seconds (N having been first initialized at step 201).

This verification begins (step 203) with a peak-to-peak measurement of the feedback voltage inputted to the microcontroller and an update of parameter meas_fb.

Following step 203 (step 204), it is checked whether the triac is triggered or not; in other words, it is verified whether power is being supplied to load 1 or not.

If load 1 is not powered, the method verifies the operating state of triac 4 (step 205): the triac is driven in a manner such as to keep at its gate a voltage such that the triac is turned off and no current can flow between terminals MT1 and MT2, so that in these conditions the supply current flowing through shunt resistor R3 should be null and terminal MT1 of triac 4 should have the same value as the voltage Vcc, and the value read at the input of microcontroller 5 should be equal to the voltage drop across resistance R5 of divider R4-R5.

In the embodiment example shown in Fig. 1, wherein R4 and R5 have the same value of 10KΩ and wherein Vcc is 5V, microcontroller 5 should read a voltage value of 2.5V at input 7.

At step 205 it is then checked whether the parameter meas_fb measured at step 203 is greater than a preset value (#Const_diodo_CC). If this condition is verified, then the triac is operating in diode mode with short-circuited junctions and the associated Fault parameter (step 206) is stored into the memory of the control unit; otherwise, no fault is detected in triac 4.

In both cases it is detected that load 1 is off, and therefore it is no longer possible to carry out any verification of its operation, but only a verification of the operation of the drive device (triac 4).

The verification procedure described herein with reference to Fig. 2 is repeated periodically within each on or off cycle of load 1, every time beginning again by executing first the steps of the start-up transient phase, followed by those of the pick-up phase and those of the normal state phase.

Referring back to step 204, if triac 4 is triggered, a first verification is carried out (step 207) in order to check that the load is connected safely.

In fact, if the supply of power to load 1 is interrupted, then during the pick-up phase the highest peak-to-peak reading (meas_fb_rif) will be null because a direct voltage will be inputted to microcontroller 5; in the example provided in Fig. 1, said voltage is Vcc/2, i.e. 2.5V.

It may however happen that, even though load 1 is connected, triac 4 is operating in diode mode with open-circuit junctions; in such a case, load 1 will draw current, but triac 4 will only allow current to flow on either the positive or negative half-waves, so that the peak-to-peak reading of the voltage inputted to the microcontroller will be lower than expected.

In order to detect these two possible faults, step 207 checks whether the following condition is fulfilled or not:

$$meas\_fb\_rif > \#Const\_BLOC\_CA$$

where #Const_BLOC_CA is an experimentally determined preset value.

In other words, step 207 checks whether the highest peak-to-peak reading (meas_fb_rif) taken during the pick-up phase is greater than a certain value #Const_BLOC_CA.

If it is, the load is certainly connected and the next step will verify that it is operating properly (step 208). Otherwise, there is a fault which must be identified: disconnected load or malfunctioning triac (this verification will be carried out at step 210).

In order to check that the load is operating correctly, step 208 checks if the normal state absorption is lower than the absorption during the pick-up phase.

This verification is particularly useful for a fan, which may stay on in a blocked condition, in which case there will be no absorption reduction when the fan is in the normal state.

The load absorption reduction is reflected in a reduction of the peak-to-peak value of the feedback voltage inputted to microcontroller 5.

At step 208, the method thus verifies if the following condition is met:

$$\left| meas\_fb\_rif - meas\_fb \right| > \#Const\_BLOC$$

where #Const_BLOC is an experimentally determined preset value.

In other words, step 208 verifies if the punctual peak-to-peak feedback voltage reading is lower than the highest peak-to-peak value measured during the pick-up phase for the same feedback voltage.

The above-described test carried out at step 208 may be replaced with a verification of the following condition:

$$\left| \frac{meas\_fb\_rif - meas\_fb}{meas\_fb\_rif} \right| > x\%$$

where x% is an experimentally determined preset value.

If the condition of step 208 is fulfilled, then the load is operating correctly and the current execution of the method for verifying the operation of load 1 ends.

If the condition of step 208 is not fulfilled, then the load is considered to be blocked and the associated Fault parameter is set (step 209) in the memory of the control unit, after which the verification ends.

Referring back to the case wherein a fault is detected at step 207, the method provides for further verifications.

At step 210 (which is arrived at if the condition of step 207 is not met), the following condition is verified:

$$meas\_fb\_rif > \#Const\_CA$$

which means checking if the highest peak-to-peak reading taken during the pick-up phase (meas_fb_rif) is greater than an experimental value #Const_CA which is lower than #Const_BLOC_CA.

If the condition of step 210 is not fulfilled, then the feedback voltage is substantially constant, which means that the load is not connected (fault detected at step 211, when the associated Fault parameter is set in the memory of the control unit before the verification ends).

On the contrary, if the condition of step 210 is fulfilled, then the method goes on to step 212 to check if triac 4 is operating in diode mode.

Step 212 verifies the following condition:

$$meas\_fb > \#Const\_diodo\_CA$$

where #Const_BLOC is an experimentally determined preset value comprised between #Const_CA and #Const_BLOC_CA.

This test is equivalent to verifying if the punctual peak-to-peak feedback voltage reading (meas_fb) is greater than the value that would be read if the triac, when operating in diode mode, only allowed either the positive or the negative half-wave of the mains alternating voltage to pass through.

If the condition verified at step 212 is not fulfilled, then the triac is operating in diode mode and the associated fault parameter is set in the control unit (step 213); otherwise, the fault has not been identified with certainty and the verification of the operation of load 1 ends, deferring the identification of the fault to the next verification.

The above-described method allows the control unit to detect the presence of faults in both load 1 and triac 4; when any faults are found, the control unit will take appropriate safety measures, e.g. stop the household appliance.

It is however apparent that the preferred embodiment example described herein with reference to Figs. 1 and 2 may be subject to many changes.

For example, the control unit may be replaced by a plurality of electronic components and processors in communication with one another, one of which sends the signals for controlling triac 4 and another one receives the feedback signal and carries out all necessary steps for verifying the operating state of the triac and the load.

Furthermore, although the preferred embodiment example has been described above with reference to a triac, it is also clear that the latter may be replaced by another type of electronic switch, e.g. a pair of SCRs connected in antiparallel (i.e. in parallel, but with each SCR allowing current to flow in opposite directions) or an electromechanical relay.

In such a case, the circuit solution of Fig. 1 will still allow to detect any faults in the switch or the load, but the conditions to be verified in order to detect any faults in the switches must be suitably adjusted to the specific type of switch in use.

## Claims

1. Method for monitoring a household appliance, wherein the household appliance comprises

   at least one electric load (1) connected to an alternating power mains (2,3) by means of a switch (4),
   a control unit (5) which opens or closes said switch (4) so that when the switch is closed a supply current flows through both the load and the switch, and
   a feedback circuit (R3,R4,R5) which provides the control unit with a feedback signal that is used by the control unit (5) for detecting any malfunction of the household appliance,

   the method being **characterized in that** said feedback signal is correlated to said supply current, and that said control unit carries out a verification of the operation of said load and/or said switch, said verification comprising the steps of

   measuring the amplitude of said feedback signal, and
   comparing said reading with at least one reference value, so as to determine if said load and/or said switch are operating correctly.

2. Method according to claim 1, wherein the feedback signal is bound to the supply current (2,3) that flows on the branch extending from the power mains to said switch (4).

3. Method according to claim 2, wherein said feedback circuit comprises a shunt resistor (R3) arranged on the branch extending from the power mains to said switch (4), and wherein said feedback signal is a voltage proportional to the voltage being present across said shunt resistor.

4. Method according to claim 3, wherein said feedback circuit comprises a voltage divider (R4,R5) connected to said shunt resistor (R3), and that said feedback signal is the voltage taken across a resistance (R5) of the divider.

5. Method according to any of the preceding claims, wherein said control unit measures an amplitude of said feedback signal said measurement being in particular a peak-to-peak feedback signal reading.

6. Method according to any of the preceding claims, comprising a start-up transient phase wherein the frequency at which said verification of the operation of said load and/or said switch must be repeated is defined.

7. Method according to claim 6, wherein said frequency depends on the type of load and/or on the operating mode of the household appliance.

8. Method according to any of the preceding claims, wherein during a pick-up phase of said load a plurality of readings of said feedback signal are taken and the highest value of said plurality of readings is stored, said pick-up phase being **characterized by** a progressive reduction of the energy required by the load.

9. Method according to claim 8, wherein the pick-up phase is followed by a normal state phase in which said control unit takes a punctual reading of said feedback signal.

10. Method according to claim 9, wherein said control unit verifies (204) the ON/OFF state of the load.

11. Method according to claim 10, wherein, if the load is off, said punctual reading is compared (205) with a first reference value in order to check if said switch is operating correctly.

12. Method according to claim 10, wherein, if the load is on, said highest value of said plurality of readings is compared (207) with a second reference value in order to check if said load is connected.

13. Method according to claim 12, wherein, if the load is connected, it is checked (208) if the normal absorption of the load is lower than an absorption of the load during the pick-up phase, so as to verify if the load is malfunctioning.

14. Method according to claim 12, wherein, if said load appears to be disconnected, said highest value of said plurality of readings is compared (210) with a third reference value which is lower than said second reference value, so as to check if said load is connected but the switch is not operating correctly.

15. Household appliance comprising

at least one electric load (1) connected to an alternating power mains (2,3) by means of a switch (4),
a control unit (5) which opens or closes said switch (4) so that when the switch is closed a supply current flows through both the load and the switch, and
a feedback circuit (R3,R4,R5) which provides the control unit with a feedback signal that is used by the control unit (5) for detecting any malfunction of the household appliance,

**characterized in that** said feedback circuit is adapted to provide said control unit with a feedback signal correlated to said supply current, and that said control unit is adapted to implement a method according to any of claims 1 to 14.

Fig.1

Fig. 2